# EUROPEAN PATENT SPECIFICATION

(11) **EP 1 297 276 B1**
(45) Date of publication and mention of the grant of the patent: **23.09.2009**
(21) Application number: 01945537.7
(22) Date of filing: 05.07.2001
(51) Int. Cl.: F16L 25/00

(54) **CONDUIT END FITTINGS**
LEITUNGSENDANSCHLUSS
RACCORD DE CONDUIT

(30) Priority: 06.07.2000 GB 0016669
(43) Date of publication of application: 02.04.2003
(73) Proprietor: Pipestream B.V., 2288 GK Rijswijk (NL)
(72) Inventor: BURKE, Raymond Nicholas, Bedford, Bedfordshire Mk40 2AZ (GB); WITZ, Joel, Aaron, Newdigate, Surrey RH5 5DS (GB)
(74) Representative: Curtis, Philip Anthony
(86) International application number: PCT/GB2001/003022
(87) International publication number: WO 2002/004856

(56) References cited:
- BE-A- 565 460
- GB-A- 847 721
- GB-A- 2 340 906
- US-A- 5 864 938

## Description

The invention relates to an end fitting for a tubular conduit such as a tube, hose or pipe.

The end fitting may be used for low pressure conduits, but is particularly advantageous as an end fitting which is suitable for terminating high pressure conduits (i.e. those in which the operating pressure of the conduit is typically greater than 50 x 10⁵ N/m²).

The end fitting is particularly suitable for conduits comprising multiple concentric layers; such as the high pressure flexible conduit used in the recovery of offshore hydrocarbon deposits, as discussed in WO 99/57475. In this case, the multiple layer conduit has one or more of the layers formed from helically wound components (windings).

End fittings may be releasably or permanently attached to conduits. Permanent end fittings are known for robust sealing of conduit ends, but have drawbacks in that they often require plastic deformation of the conduit and/or parts of the end fitting. For example, it may be required that the end fitting is crimped onto the pipe. Such end fittings are not re-usable, and the process of attaching the end fitting to the conduit often deforms the conduit, as discussed in BE 565 460 (corresponding to the preamble of claim 1).

Releasable end fittings are not available for high pressure conduits. In addition, current releasable end fittings often require a number of components to provide a reliable seal, even when used for low pressure conduits. End fittings are required which can be applied and re-applied, and at the same time provide an effective seal, particularly for high pressure applications.

For conduits formed from multiple concentric layers, each layer is often terminated separately, making conduit termination an awkward and time consuming activity. For example, the current end fittings used to terminate the above mentioned offshore hydrocarbon recovery flexible conduits require separation of the conduit layers, and rely on bending tensile wire layers over an internal surface of the end fitting. This procedure substantially holds the end fitting onto the conduit. An epoxy-resin also needs to be applied around these deformed tensile wire layers to both provide a seal, and also to hold the wire layers within the end fitting under conduit loading.

According to the present invention as defined in claim 1, there is provided a conduit end fitting comprising inner and outer co-axial tubular elements engageable by complementary screw threads at one end and each provided at their opposite ends with screw threads to engage, in use, a conduit.

An end fitting which can engage with a feature of the conduit is provided. The screw thread engagement ensures that the end fitting does not damage the conduit or any component layers thereof, transmits load over a substantial area, and can be removed and re-applied to the conduit. There is no need to crimp the end fitting onto the conduit and thus plastic deformation of the conduit and/or end fitting is avoided.

The two-part fitting provides an end fitting which transmits loads over a substantial area, and terminates and can seal the pipe. As the elements are engageable with both the conduit and with one another, service loads are distributed between the elements at more than one location and across a substantial area, and the maximum load seen at any one element location is reduced.

The invention as defined in claim 2 also extends to a combination of the end fitting and a tubular conduit formed from a helical winding wherein turns of the helical winding define a helical thread on at least an outer or inner surface of the conduit for engagement with one of the screw threads at the opposite end of the end fitting.

Preferably the conduit has a second helical winding having a complementary helical thread to engage with the other screw thread at the opposite end of the end fitting.

The outer element may have a thicker cross section at the conduit end than at the inter-connecting end, and/or the inner element may have a thicker cross section at the inter-connecting end than at the conduit end. This ensures that a sufficient thickness of the elements is available where it is most required. Preferably, the cross section of the elements tapers from one end to the other end. This enables gradual take up of load across the elements.

Advantageously, the screw thread at the one end is contra-helical to the threads at the opposite end. Therefore, loosening engagement of the threads between the conduit and the end fitting will tighten engagement of the threads of the elements at the inter-connecting end, and vice versa. At least one end will be engaged regardless of the direction of relative rotation, and the end fitting can be used in dynamic situations in which relative rotation of elements in both directions is likely to occur, such as in the recovery of offshore hydrocarbons. In certain circumstances, for example when the end fittings are used with low pressure conduits, this is sufficient to maintain an effective seal, and prevent substantial leakage of fluid from the conduit, or ingress of fluid into the conduit.

Preferably, the inner and/or outer elements have at least one shoulder located to abut at least one layer of the conduit. The shoulder gives a sealing surface.

In certain circumstances, particularly when used with high pressure conduits, the end fitting will require a sealing element to provide an extra barrier to prevent fluid leakage out of/into the conduit. Preferably, the end fitting comprises an annular sealing element positioned between the inner and outer elements. Preferably, one or both of the inner and outer elements have a shoulder on which the sealing element surfaces abut.

Advantageously, the end fitting comprises an energising element to ensure that the sealing element is sufficiently compressed to provide an adequate seal. The energising element is positioned in the end fitting to be movable to set the sealing element.

The inner and/or outer elements may comprise complementary key slots positioned to ensure that they are correctly circumferentially aligned.

The invention also provides a method of fitting the inner and outer co-axial elements to the tubular conduit (as defined in claim 11), comprising the steps of screwing the outer element conduit end screw thread onto the outer winding helical thread until the outer element inter-connecting end is positioned to allow access for the inner element to the conduit, screwing the inner element conduit end screw thread onto the inner winding helical thread, and screwing the outer element back to connect the inter-connecting ends of the inner and outer elements.

The conduit end fitting can be used for conduits which operate at pressures less than 50 x 10¹ N/m². However, it is also particularly suitable for conduits which operate at pressures of at least 50 x 10⁵ N/m², preferably at least 100 x 10¹ N/m², more preferably at least 150 x 10¹ N/m², and most preferably at least 200 x 10⁵ N/m². The conduit end fitting is suitable for the high pressure flexible conduits used in offshore hydrocarbon recovery, of the types described in WO 99/57475.

The invention will now be described in detail with reference to the following Figures in which:
Figure 1 is a cross-section of an end fitting according to the present invention engaged with a multilayer high pressure conduit;
Figure 2A is a cross-section of an end fitting according to the present invention engaged with a multilayer conduit;
Figure 2B is an exploded view of a portion of Figure 2A;
Figure 2C is an exploded view of a portion of an outer element of the end fitting of the present invention;
Figure 3 is a cross-section of the end fitting according to the present invention engaged with a single layer conduit;

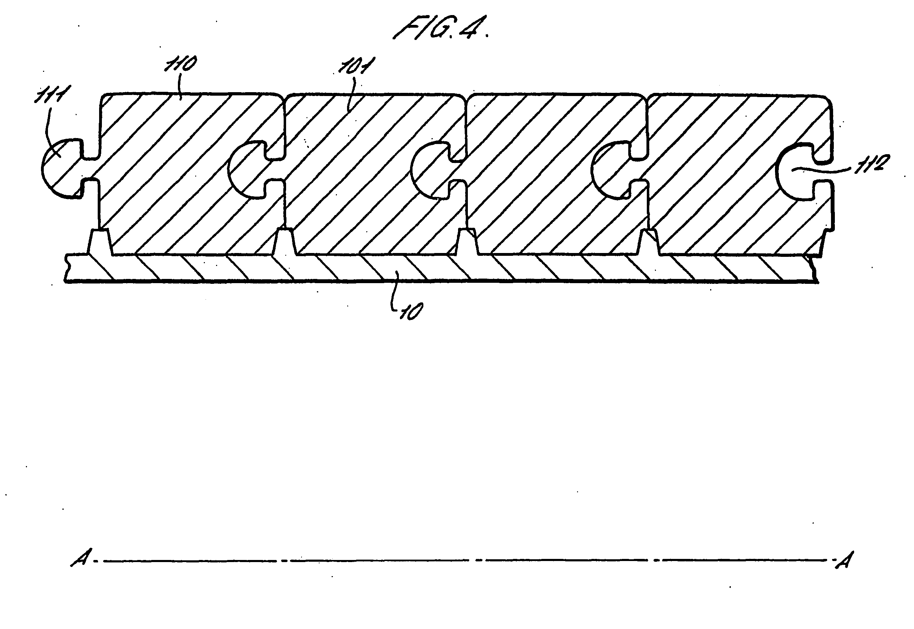

Figure 4 is a cross-section of the conduit end portion of an end fitting of the present invention engaged with a particular high pressure capacity conduit winding;

The figures show only half the end fitting/conduit cross section on one side of the end fitting/conduit axis A-A of symmetry.

Although the description relates particularly to high pressure end fittings, the end fitting described can be applied to low pressure conduits also. The end fittings can be made of any material which provides the required structural strength and has the required machinability/formability e.g. steel for high pressure end fittings.

High pressure conduits 100 are often reinforced by helically wound armour 101 which is profiled to allow each subsequent turn to interlock with the previous turn. Such structures are compliant in flexure. Generally, the armour is formed from steel or composite strip. An example of this type of tubular conduit is un-bonded flexible conduit, used in the recovery of offshore hydrocarbon deposits.

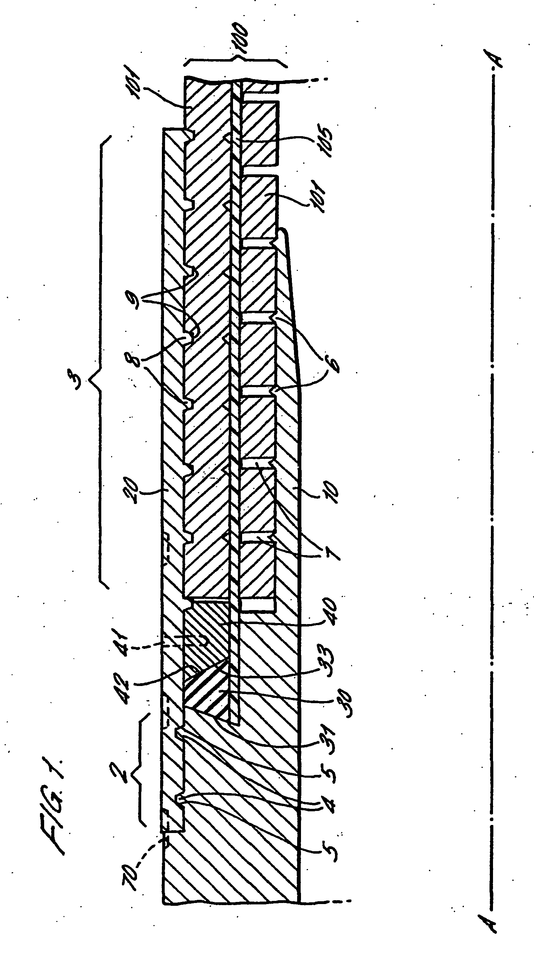

Figure 1 shows a first embodiment of the end fitting 1 for terminating such a flexible conduit 100. The flexible conduit 100 is formed from a number of co-axial layers; two helically wound layers 101 between which is an extruded polymer sealing layer 105. The sealing layer 105 may of course be made from a metallic or composite material or may be made from other known processes.

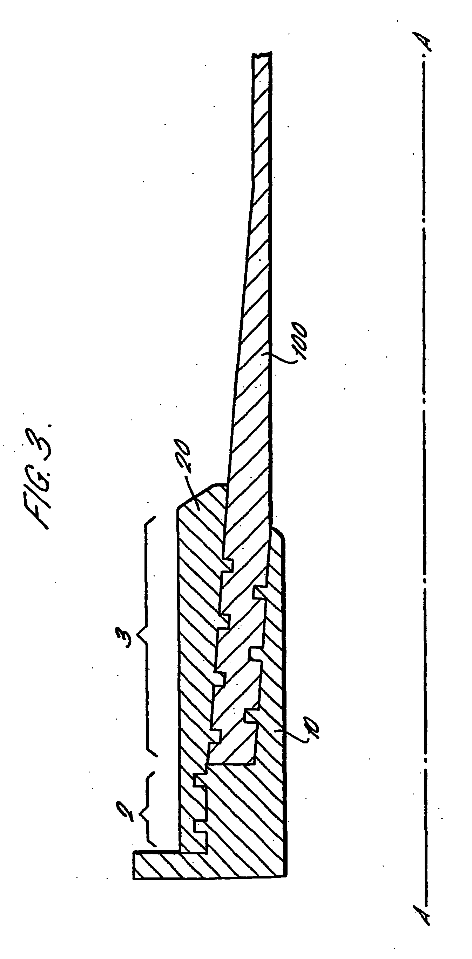

A helical groove 7,9 is defined between adjacent turns of the helical winding 101, and can be conveniently used to engage with the end fitting 1. In a different configuration, the polymer sealing layer 105 may be inscribed with one or more helical grooves on inner and/or outer surfaces for engagement with the end fitting 1. Furthermore, although Figure 1 shows a conduit 100 comprising more than one layer, the end fitting 1 can be fitted to a conduit 100 comprising only a single layer, as shown in Figure 3. This single layer can be the extruded polymer layer 105 or a single helical winding 101, again with grooves on the inner and/or outer surface for engagement with the end fitting 1.

The end fitting 1 comprises inner and outer co-axial tubular elements 10,20. The end fitting 1 has a first end 2 at which the elements 10,20 releasably engage with one another, and an opposite second end 3 at which the elements 10,20 releasably engage with the conduit 100. The distance between the first and second ends 2,3 is typically at least twice the pitch of the thread on the conduit 100.

The first end 2 comprises a first helical thread 4 on a outer surface of the inner element 10, and a complementary first helical thread 5 on a inner surface of the outer element 20. In a different embodiment, the helical threads 4 and 5 may be respectively on inner and outer surfaces of the elements 10,20 (not shown). The essential point for the position of the first helical threads 4,5 is that they are engageable with one another, and thus join/seal the end fitting 1 at the first end 2.

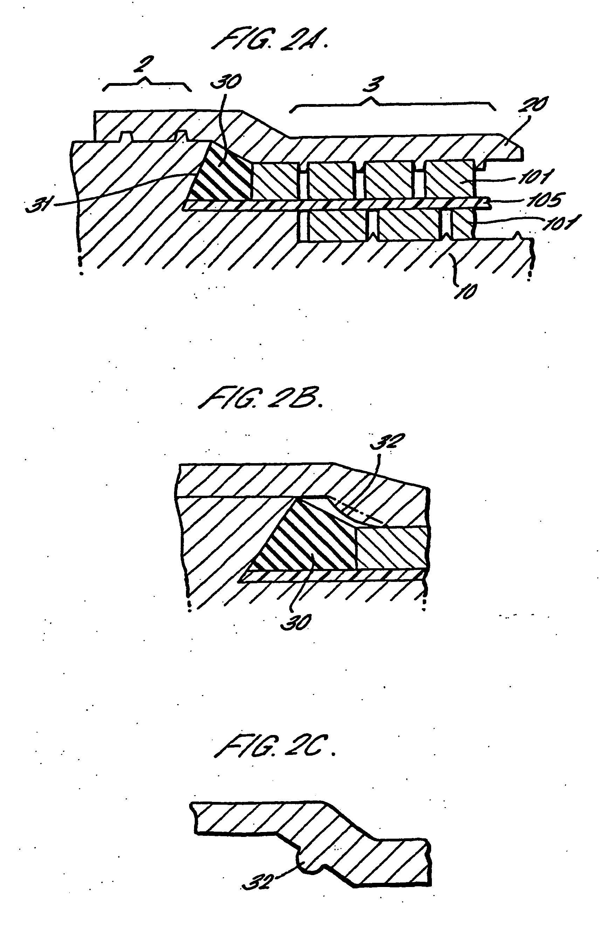

At the second end 3, the inner element 10 has a second helical thread 6 on a outer surface of the inner element 10. The second helical thread 6 engages with a helical thread 7 on a inner layer of the conduit 100. Similarly, the outer element 20 has a second helical thread 8 on the inner surface of the element 20 which engages with a helical thread 9 on a outer layer of the conduit 100. In the embodiment shown in Figures 1,2 the conduit helical threads 7,9 are defined by turns of helical windings 101, and have different pitches. Alternatively, the threads 7,9 may have the same pitch.

In an alternate embodiment, the second helical threads 6,8 on the elements 10,20 may be on the inner and outer surfaces of their corresponding elements 10,20, with the complementary conduit threads 7,9 positioned appropriately. The conduit threads 7,9 may be on inwardly or outwardly facing surfaces of the conduit, as long as the conduit thread 7 is positioned inwardly of the conduit thread 9.

The threads 4,5, and 6,7,8,9 at the first and second ends 2,3 of the elements 10,20 are of the same pitch. Thus, both ends 2,3 of the end fitting 1 may be engaged by relative rotation of the elements 10,20 (see assembly, discussed below).

Thread engagement can advantageously seal fluid flow and allows engagement of the end fitting 1 to the conduit 100 without, according to the invention, the need to plastically deform the conduit 100 or the end fitting 1. The threads 4,5, 6,7,8,9 provide a form of labyrinth seal which, particularly in low pressure applications, would not necessitate the need for other sealing elements such as "0" rings.

In another embodiment, the outer element 20 has a thicker cross section at the second end 3 than at the first end 2, and/or the inner element 10 has a thicker cross section at the first end 2 than at the second end 3 (Figure 3). This ensures that a sufficient thickness of the elements is available where it is most required. The cross section of the elements 10,20 taper from the thicker end to the thinner end to enable gradual take up of load across the elements 10,20, and avoids stress concentrations. The combined cross section of the tapered inner and outer elements 10,20 provide an end fitting 1 with a constant thickness (Figure 3).

When used with multi-layer conduits 100 which have at least one sealing layer 105, one or more of the sealing layer(s) 105 may be used to abut against one or more shoulders 31 on one or more of the element(s) 10,20. Thus, abutment of the sealing layer(s) 105 on the element shoulder(s) 31 would seal the conduit 100 within the end fitting 1, and inhibit leakage of fluid.

The first and second end threads 4,5 and 6,7,8,9 are contra-helical such that relative rotation of the elements 10,20 will maintain engagement of the end fitting 1 on the conduit 100 at either the first or second end 2,3. For example, from the perspective of looking down the conduit wall, one helix will appear clockwise (or right hand lay) and the other will appear anti-clockwise (or left hand lay). Thus, rotational torsion of the conduit 100 will not cause the end fitting 1 to unscrew or vice-versa.

A sealing element 30 is provided as a barrier to prevent fluid leakage out of/into the conduit 100, and is positioned between the inner and outer elements 10,20. The sealing element 30 may be a ring, hoop or split ring. A shoulder 31,32 is provided on the inner and/or outer elements 10,20 on which the sealing element 30 may abut (Figures 1 and 2). The shoulders 31,32 may be inclined or curved (Figures 2A, 2B) to facilitate sealing between the sealing element 30 and the shoulders 31,32.

It would be advantageous to have end fittings 1 which have a simple means for energising the seal element 30 to a required amount, and then adjusting and re-adjusting the sealing element 30 during operation and maintenance. It is important to note that energisation of a seal was previously developed by trial and error, and involves plastic deformation of components, and a consequent margin of uncertainty. In the end fitting 1 presented herein, the sealing element 30 is energised against a solid segment of the inner element 10. Furthermore, the relative displacement between two mechanical elements 10,20 should involve elastic deformation only, which can be precisely modelled.

Advantageously, the end fitting 1 comprises an energising element 40 to ensure that the sealing element 30 is sufficiently compressed to provide an adequate seal. The energising element 40 is positioned in the end fitting 1 such that at least one energising element surface 42 is adjacent to and abuts with at least one surface 33 of the sealing element 30.

The energising element 40 is controllably compressable and depressable by means of a screw housed in an radial aperture 41 of the outer element 20. The aperture 41 may extend into the energising element 40.

The end fitting inner and/or outer elements may comprise key slots 70 positioned to ensure that the inner and outer elements 10,20 are circumferentially aligned, and stay aligned during operation. The key slots 70 are also positioned so that the elements can be locked into position once the sealing element has been correctly energised. For example, the key slots 70 may be located every 30 degrees around the circumference of the inner and/or outer elements 10,20.

The multilayer conduit 100 is prepared for assembly by cutting back the layers 101,105 to expose the internal and external layers which have the threads 7,9, and also the intervening sealing layer 105. The outer element 20 is then threaded onto the outer conduit thread 9 and turned until it has travelled some way down the conduit length. The sealing element 30 and energising element 40 are placed in position. Then, the inner element 10 is threaded onto the inner conduit thread 7. Grub screws or pins are inserted through the outer element aperture 41 onto the energising element 40 and hold the energising element 40 into position. The inner element 10 is rotated to eliminate any gaps between the components 30,40 of the end fitting 1 and also the sealing layer 105. Finally, the outer element 20 is rotated so as to bring it back to engage the first threads 4,5 of the end fitting 1. Back rotation of the outer element 20 towards the free end of the conduit 100 will also compress and energise the seal.

## Claims

1. A conduit end fitting (1) comprising inner and outer co-axial tubular elements (10,20) engageable by complementary screw threads (4,5) at one end and each provided at their opposite ends with screw threads (6,8), **characterised by** the latter screw threads (6,8) being to engage, in use, a conduit (100) formed from a helical winding to include helical threads (7,9) on the inner and outer surface of the conduit, the opposite end screw threads (6,8) being complementary to the helical threads (7,9) for the engagement and the engagement being made without plastically deforming the conduit or the inner and outer tubular elements.

2. A combination of a conduit end fitting (1) according to claim 1, and a tubular conduit (100) formed from a helical winding wherein turns of the helical winding define a helical thread (7,9) on at least an outer or inner surface of the conduit for engagement with one of the screw threads (6,8) at the opposite end of the end fitting.

3. The combination as claimed in claim 2, wherein the conduit has a second helical winding having a complementary helical thread (7,9) to engage with the other screw thread (6,8) at the opposite end of the end fitting.

4. The combination as claimed in claim 2 or claim 3, wherein the outer element (20) has a thicker cross section at the conduit end (3) than at the inter-connecting end (2), and/or the inner element has a thicker cross section at the inter-connecting end (2) than at the conduit end (3).

5. The combination as claimed in claim 4, wherein the cross section of the elements tapers from one end to the other end.

6. The combination as claimed in any one of claims 2 to 5, wherein the screw thread at the one end is contrahelical to the threads at the opposite end.

7. The combination as claimed in any one of claims 2 to 6, wherein the inner and/or outer element have at lease one shoulder (31,32) located to abut at least one layer of the conduit.

8. The combination as claimed in any one of claims 2 to 7, wherein the end fitting comprises an annular sealing element (30) positioned between the inner and outer elements.

9. The combination as claimed in claim 8, wherein the end fitting comprises an energising element (40) positioned in the end fitting to be moveable to set the sealing element

10. The combination as claimed in any one of claims 2 to 9, wherein the inner and/or outer elements comprise complementary key slots (70) positioned to ensure that they are correctly circumferentially aligned.

11. A method of assembling the combination of claim 6, comprising the steps of screwing the outer element conduit end screw thread (8) onto the outer winding helical thread (9) until the outer element interconnecting end (2) is positioned to allow access for the inner element (10) to the conduit (100), screwing the inner element conduit end screw thread (6) onto the inner winding helical thread (7), and screwing the outer element (20) back to connect the inter-connecting ends (2) of the inner and outer elements (10,20).

## Patentansprüche

1. Leitungsendanschluss (1), umfassend innere und äußere koaxiale röhrenförmige Elemente (10, 20), welche an einem Ende durch komplementäre Schraubgewinde (4, 5) in Eingriff treten können und jedes an dem entgegengesetzten Ende über Schraubgewinde (6, 8) verfügt, **dadurch gekennzeichnet, dass** die letzeren Schraubgewinde (6, 8) bei Benutzung zum Eingriff in eine Leitung (100) vorgesehen sind, welche mit einer wendelförmigen Wicklung gebildet wird, um auf der inneren und äußeren Oberfläche der Leitung wendelförmige Gewinde (7, 9) zu enthalten, die Schraubgewinde (6, 8) am entgegengesetzten Ende für den Eingriff komplementär zu den wendelförmigen Gewinden (7, 9) sind und der Eingriff ohne eine plastische Verformung der Leitung oder des inneren oder äußeren röhrenförmigen Elements erfolgt.

2. Kombination eines Leitungsendanschlusses (1) nach Anspruch 1 und einer röhrenförmigen Leitung (100), welche mit einer wendelförmigen Wicklung gebildet wird, wobei Windungen der wendelförmigen Wicklung ein wendelförmiges Gewinde (7, 9) an mindestens einer äußeren oder inneren Oberfläche der Leitung festlegen zum Eingriff in eines der Schraubgewinde (6, 8) an dem entgegengesetzten Ende des Endanschlusses.

3. Kombination nach Anspruch 2, wobei die Leitung eine zweite wendelförmige Wicklung mit einem komplementären wendelförmigen Gewinde (7, 9) enthält, um in das andere Schraubgewinde (6, 8) des entgegengesetzten Ende des Endanschlusses einzugreifen.

4. Kombination nach Anspruch 2 oder 3, wobei das äußere Element (20) an dem Leitungsende (3) einen größeren Querschnitt als an dem verbindenden Ende (2) hat und/oder das innere Element an dem verbindenden Ende (2) einen größeren Querschnitt als an dem Leitungsende (3) hat.

5. Kombination nach Anspruch 4, wobei sich der Querschnitt der Elemente von einem Ende zum anderen Ende verjüngt.

6. Kombination nach einem der Ansprüche 2 bis 5, wobei das Schraubgewinde an dem einen Ende entgegengesetzt wendelförmig zu den Gewinden an dem entgegengesetzten Ende ist.

7. Kombination nach einem der Anspruche 2 bis 6, wobei das innere und/oder das äußere Element mindestens einen Absatz (31, 32) besitzen, welcher zum Anliegen an mindestens eine Schicht der Leitung angeordnet ist.

8. Kombination nach einem der Anspruche 2 bis 7, wobei der Endanschluss ein ringförmiges Dichtelement (30) umfasst, welches zwischen dem inneren und dem äußeren Element angeordnet ist.

9. Kombination nach Anspruch 8, wobei der Endanschluss ein Anzugselement (40) umfasst, welches beweglich in dem Endanschluss angeordnet ist, um das Dichtelement zu fixieren.

10. Kombination nach einem der Ansprüche 2 bis 9, wobei das innere und/oder das äußere Element komplementäre Keilnuten (70) umfasst, welche so angeordnet sind, dass eine korrekte umfängliche Ausrichtung der Elemente sichergestellt wird.

11. Verfahren zum Zusammenfügen der Kombination nach Anspruch 6, umfassend die Schritte eines Schraubens des Schraubgewindes (8) an dem Leitungsende des äußeren Elements auf das wendelförmige Gewinde (9) der äußeren Wicklung bis das Verbindungsende (2) des äußeren Elements so angeordnet ist, dass ein Eingriff des inneren Elements (10) auf die Leitung (100) möglich ist, eines Schraubens des Schraubgewindes (6) an dem Leitungsende des inneren Elements auf das wendelförmige Gewinde (7) der inneren Wicklung, und eines Zurückschraubens des äußeren Elements (20), um die Verbindungsenden (2) des inneren und des äußeren Elements (10, 20) zu verbinden.

## Revendications

1. Raccord d'extrémité de conduit (1) comprenant des éléments tubulaires (10, 20) coaxiaux intérieur et extérieur pouvant être accouplés par des filets de vis (4, 5) complémentaires à une extrémité et chacun étant dotés à leurs extrémités opposées de filets de vis (6, 8), **caractérisé en ce que** lesdits filets de vis (6, 8) peuvent s'accoupler, pendant l'utilisation, à un conduit (100) formé d'un enroulement hélicoïdal pour comprendre des filets hélicoïdaux (7, 9) sur la surface intérieure et extérieure du conduit, les filets de vis (6, 8) à l'extrémité opposée étant complémentaires des filets hélicoïdaux (7, 9) pour l'accouplement, et l'accouplement étant réalisé sans déformer plastiquement le conduit ou les éléments tubulaires intérieur et extérieur.

2. Combinaison d'un raccord d'extrémité de conduit (1) selon la revendication 1, et un conduit tubulaire (100) formé à partir d'un enroulement hélicoïdal, dans lequel les tours de l'enroulement hélicoïdal définissent un filet hélicoïdal (7, 9) sur au moins une surface extérieure ou intérieure du conduit pour l'accouplement avec l'un des filets de vis (6, 8) à l'extrémité opposée du raccord d'extrémité.

3. Combinaison selon la revendication 2, dans laquelle le conduit comporte un second enroulement hélicoïdal ayant un filet hélicoïdal (7, 9) complémentaire pour s'accoupler avec l'autre filet de vis (6, 8) à l'extrémité opposée du raccord d'extrémité.

4. Combinaison selon les revendications 2 ou 3, dans laquelle l'élément extérieur (20) a une section transversale plus épaisse à l'extrémité du conduit (3) qu'à l'extrémité de raccordement (2), et/ou l'élément intérieur a une section transversale plus épaisse à l'extrémité de raccordement (2) qu'à l'extrémité du conduit (3).

5. Combinaison selon la revendication 4, dans lequel la section transversale des éléments présente une variation continue d'une extrémité à l'autre extrémité.

6. Combinaison selon l'une quelconque des revendications 2 à 5, dans lequel le filet de vis à l'extrémité est hélicoïdale dans le sens contraire des filets à l'extrémité opposée.

7. Combinaison selon l'une quelconque des revendications 2 à 6, dans lequel l'élément intérieur et/ou extérieur comporte au moins un épaulement (31, 32) disposé pour être en butée avec au moins une couche du conduit.

8. Combinaison selon l'une quelconque des revendications 2 à 7, dans laquelle le raccord d'extrémité comprend un élément d'étanchéité annulaire (30) positionné entre les éléments intérieur et extérieur.

9. Combinaison selon la revendication 8, dans laquelle le raccord d'extrémité comprend un élément d'excitation (40) positionné dans le raccord d'extrémité pour être mobile pour fixer l'élément d'étanchéité.

10. Combinaison selon l'une quelconque des revendications 2 à 9, dans lequel les éléments intérieur et/ou extérieur comprennent des rainures de logement de clavette (70) complémentaires positionnées pour garantir qu'elles sont correctement alignées circonférentiellement.

11. Procédé d'assemblage de la combinaison selon la revendication 6, comprenant les étapes de vissage du filet de vis d'extrémité du conduit de l'élément extérieur (8) sur le filet hélicoïdal de l'enroulement extérieur (9) jusqu'à ce que l'extrémité de raccordement de l'élément extérieur (2) soit positionnée pour permettre à l'élément intérieur (10) d'accéder au conduit (100), de vissage du filet de vis d'extrémité du conduit de l'élément intérieur (6) sur le filet hélicoïdal de l'enroulement intérieur (7), et de vissage de l'élément extérieur (20) en place pour raccorder les extrémités de raccordement (2) des éléments intérieur et extérieur (10, 20).
